# EUROPEAN PATENT SPECIFICATION

(11) **EP 1 647 447 B1**
(45) Date of publication and mention of the grant of the patent: **12.03.2014**
(21) Application number: 05021955.9
(22) Date of filing: 07.10.2005
(51) Int. Cl.: B60R 1/00

(54) **Rearview recognition apparatus for a vehicle**
Fahrzeugrückblicksystem
Système de rétroviseur pour un véhicule

(30) Priority: 07.10.2004 JP 2004295386; 21.09.2005 JP 2005274755
(43) Date of publication of application: 19.04.2006
(73) Proprietor: Yamaha Hatsudoki Kabushiki Kaisha, Iwata-shi, Shizuoka-ken (JP)
(72) Inventor: Hannya, Yousei Yamaha Hatsudoki Kabushiki Kaisha, Iwata-shi Shizuoka-ken (JP); Andou, Yusuke Yamaha Hatsudoki Kabushiki Kaisha, Iwata-shi Shizuoka-ken (JP)
(74) Representative: Grünecker, Kinkeldey, Stockmair & Schwanhäusser

(56) References cited:
- WO-A1-2004/035352
- DE-A1- 10 043 099
- JP-A- 2000 071 877
- JP-A- 2003 339 044
- US-A1- 2004 143 373

## Description

This invention relates to a rearview recognition apparatus for a vehicle, in particular a motorcycle, and particularly to a rearview recognition apparatus capable of ensuring a wide field-of-view at the rear of the vehicle where rearview mirrors cannot cover.

Such an apparatus is known from JP 2003-339044 A1, which discloses a rear-view recognition apparatus for a vehicle, having a pair of rear-view mirrors for recognizing a rear-side view of the vehicle, an imaging device provided on the vehicle for capturing images; and a display screen for displaying images captured with the imaging device, wherein a first section of the display screen displays an area corresponding to the area visible by the rear-view mirror, and a second section of the display screen displays an area adjacent to the area given by the rear-view mirror.

Usually, a motorcycle rider looks at the rearview mirrors reflecting an object, which are mounted to the vehicle body, to check the right-, left- and rear-side views of the vehicle body. Since a pair of rearview mirrors are generally mounted to the right and left on a handlebar respectively, the rider's line-of-sight moves only a little between the two mirrors, hardly adversely affecting his/her driving. However, there exists a field-of-view where the rider cannot see with the rearview mirrors, which is called a blind spot. Thus, the rider needs to directly visually check circumstances in the blind spot.

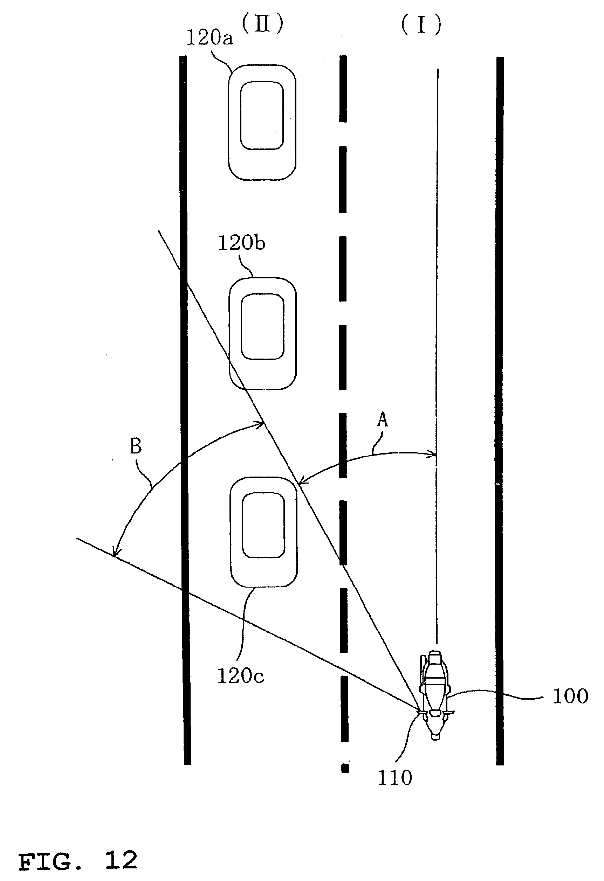

FIG. 12 illustrates a hypothetical circumstance where a rider's motorcycle 100 running on a first lane (I) is going to change to a second lane (II). On the second lane (II), other running vehicles 120a, 120b, 120c are diagonally behind the rider's motorcycle 100 while on the first lane (I), another motorcycle 130 is running right behind the rider's motorcycle 100.

As shown in FIG. 12, when the rider checks the rear side using the rearview mirror 110 mounted to the handlebar of his/her motorcycle 100, he/she can see from the rearview mirror 110 an area range shown by an angle A but cannot see an area range shown by angle B called a blind spot.

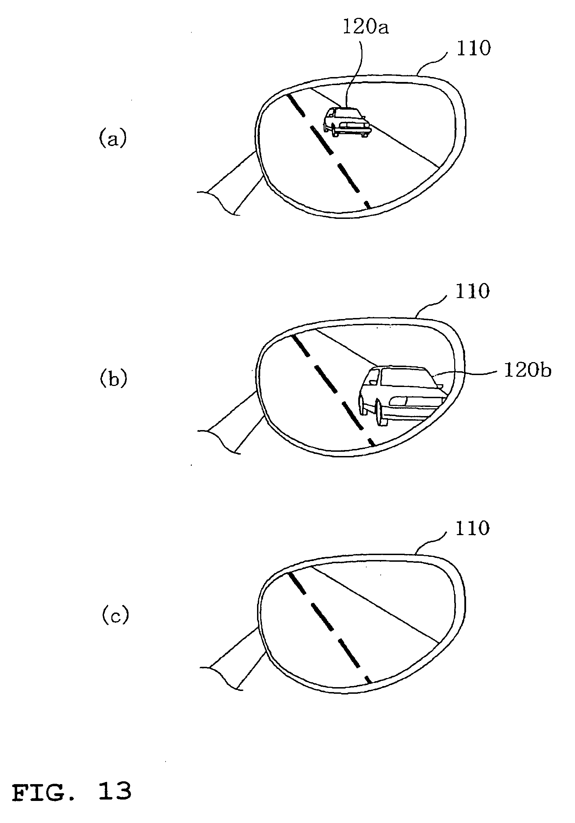

FIGs. 13(a) through 13(c) illustrate how the other vehicles 120a, 120b, 120c look in the rearview mirror 110 respectively under the circumstance shown in FIG. 12. As shown in FIG. 13(a), if another vehicle 120a looks small in the rearview mirror 110, a relative distance between the rider's motorcycle 100 and another vehicle 120a could conceivably be long. In turn, as shown in FIG. 13(b), if another vehicle 120b looks big in the rearview mirror 110, a relative distance between the rider's motorcycle 100 and another vehicle 120b could conceivably be short. In contrast, as shown in FIG. 13(c), if nothing is reflected on the rearview mirror 110, the rider cannot judge from solely looking at the rearview mirror 110 whether or not another vehicle 120c is close enough to be in the blind spot. In this case, the rider cannot recognize the presence of another vehicle 120c until he/she directly visually checks the blind spot.

In light of the foregoing, JP-A-2001-151016 and JP-A-2001-105973 disclose, in place of the rearview mirror 110, methods for showing an image of the rear-side view of the vehicle on the display screen by providing an imaging device, such as a CCD, on the vehicle for the purpose of recognizing the rear-side view of the vehicle.

JP-A-2001-151016 discloses a method for showing an image of the right or left rear-side view on the display screen, using the imaging devices disposed in right and left dead spaces of the motorcycle where the imaging devices are kept from contact with any obstacle and the rider does not interfere with the operation of the imaging devices. Another method for showing the image of the rear-side view of the vehicle is also disclosed, in which the imaging device is positioned at the rear part of the vehicle where the vehicle body covers from above the top face of the imaging device in order to prevent sunlight incidence and rainwater intrusion.

JP-A-2001-105973 discloses a method for recognizing the rear-side view using, in place of the rearview mirror, a pair of imaging devices placed at the rear part of the vehicle for constantly showing the captured images of the right and left rear-side views of the vehicle on the separate dedicated right and left display screens. This method can also reduce air resistance due to the absence of rearview mirror.

The methods for recognizing the rear-side view using the imaging device disclosed in JP-A-2001-151016 and JP-A-2001-105973, which cover a wide angle, allow the rider to visually check a wider area range on the rear side of the vehicle, compared to a visual area covered by the rearview mirror. This is more useful in terms of availability of more information to the rider.

However, such a larger volume of information, which covers a wider area range on the rear side, is not always necessary or useful for the rider while driving. The rider does need the information on the field-of-views distinctively representing the right rear-side and left rear-side. For the rider must instantly distinguish the information referring to the right rear-side view from the information referring to the left rear-side view, and based on this information, the rider should immediately determine what he/she should do next.

The method disclosed in JP-A-2001-151016 is directed to the location where on the vehicle the imaging devices should be disposed for capturing the images of the right and left rear-side views. The captured images are shown in a typical manner on the display screen placed at the center of the vehicle in front of the rider. Thus, regardless whether the rider sees the image of the right or left rear-side view, the direction of his/her line-of-sight toward the display screen remains unchanged. Unlike seeing the rearview mirror, this prevents the rider from instantly distinguishing the image of the right rear-side view from that of the left rear-side view.

In the method disclosed in JP-A-2001-105973, the images of the right and left rear-side views captured with the imaging devices respectively appear on the separate dedicated right and left display screens. Thus, the rider's line-of-sight directed to the display screen moves from the left to right, and vice versa. In view of the foregoing, this method makes it easier for the rider to distinguish the image of the right rear-side view from that of the left rear-side view.

However, if the separate right and left display screens were provided with a short distance therebetween, the rider could see as if the images of the right and left rear-side views appear on the single display screen. Thus, this does not help the rider automatically distinguish these images. On the other hand, in order to distinctively recognize, in the same manner as using the rearview mirror, whether the image of the right or left rear-side view, the separate right and left imaging devices need be disposed with a longer distance therebetween. But, it is more difficult to find a space large enough to ensure such a distance.

In contrast, information on the object reflected on the rearview mirror helps the rider almost subconsciously recognize whether the information on the right or left rear-side view because the separate rearview mirrors are mounted on the right and left sides of the handlebar. In addition, the rider can see the rearview mirrors with his/her line-of-sight maintained at as high a level as that directed forward during normal driving without significantly moving his/her line-of-sight from left to right and vice versa. This reduces burden on the rider when he/she visually checks the rear side. Further, the object reflected on the rearview mirror, that is a specular reflector, has higher definition than the image captured by a CCD and displayed on the liquid crystal monitor. Accordingly, the rear view mirror is easier for the rider to recognize the rear-side view.

Provided that a small CCD is used as an imaging device, instead of the rearview mirrors that extend off from both sides of the vehicle body and therefore could be obstacles, the images captured by the CCD would be utilized as electronic data for various image processing and recording, and therefore convenient. However, the rearview mirror surpasses the CCD in terms of instant recognizability whether the information is about the right or left rear-side view.

The present invention is derived from the foregoing situations, and an object of the invention is to provide a rearview recognition apparatus for a motorcycle, in particular a motorcycle, which ensures high visibility of a rearview mirror while allowing a rider to instantly recognize information on the right and left rear-side views of the vehicle including information on a blind spot for the rearview mirrors.

This objective is solved in an inventive manner by a rearview recognition apparatus for a motorcycle, having a pair of rear-view mirrors mounted to the right and left side of a handlebar of the motorcycle for recognizing a rear-side view of the motorcycle, a pair of imaging devices provided on the right and left sides of the motorcycle for capturing images of the right and left rear-side views of the motorcycle, and a display screen for displaying images captured with the imaging device, wherein a first section of the display screen displays an area corresponding to the area visible by the rear-view mirror, and wherein a second section of the display screen displays an area adjacent to the area given by the rear-view mirror, wherein each of the imaging devices is set to capture an image of area including a first area recognized with the rearview mirror and a second area located on the side of the first area relative to the motorcycle, and wherein the display screen displays the first and second areas so that the rider recognizes the rear-side view of the vehicle, wherein the display screen displays, in conjunction with operations of either one of right and left turn signals, the image captured with either one of the right and left imaging devices that is associated with the turn signal in operation, wherein the size of the image to be displayed on the first area is approximately equal to the size of an object reflected on the rearview mirror.

The motorcycle of the present invention has a pair of rearview mirrors mounted to the right and left sides of a handlebar for recognizing the rear-side view of the motorcycle, and comprises a pair of imaging devices provided on the right and left sides of the motorcycle for capturing images of the right and left rear-side views of the motorcycle; and a display screen for displaying the images captured with the imaging devices.

Still further, preferably the display screen indicates a distinguishing mark for distinguishing the first area from the second area.

Therein, beneficially the distinguishing mark is indicated such that at least one of the rectangular sections to be indicated along top and bottom edges of the display screen is shown in different colors.

Yet further, preferably the first area includes at least an area in the direction immediately rearward of the vehicle.

Beneficially, the second area corresponds to a blind spot for the rearview mirror or rearview mirrors.

Further, beneficially the display screen displays the image captured with the imaging device and flipped horizontally.

Yet further, beneficially the images respectively captured with the right and left imaging devices are each displayed on the right and left sections of the display screen.

Additionally, the pair of right and left imaging devices might be individually located below the rearmost part of a grab bar of the vehicle.

Moreover, there might be provided a motorcycle provided with the rearview recognition apparatus according to the above.

In the following, the present invention is explained in greater detail with respect to several embodiments thereof in conjunction with the accompanying drawings, wherein:
- FIG. 1: illustrates the location of a rearview recognition apparatus for a motorcycle of the present embodiment,
- FIG. 2: is a view to describe how to recognize the rear-side view according to the embodiment,
- FIG.3: illustrates a construction of the rearview recognition apparatus of the embodiment,
- FIG. 4: illustrates the location of an imaging device of the embodiment as an example,
- FIG. 5: is a view to describe how to recognize the rear-side view according to the embodiment,
- FIG. 6: is a view to describe how to recognize the rear-side view according to the embodiment,
- FIG. 7: is a view to describe how to recognize the rear-side view according to the embodiment,
- FIGs. 8(a) and 8(b): is a view to describe a manner of displaying on a display screen according to the embodiment,
- FIGs. 9(a) and 9(b): are views to describe another manner of displaying on the display screen according to the embodiment,
- FIG. 10: is a flowchart illustrating a process for controlling the rearview recognition apparatus of the embodiment,
- FIG. 11: illustrates a configuration of the rearview recognition apparatus of the embodiment,
- FIG. 12: is a view to describe a manner of recognizing the rear-side view using a conventional rearview mirror, and
- FIGs. 13(a) through 13(c): each show how an object looks in the conventional rearview mirror when a rider sees it to recognize the rear-side view.

The embodiment is focused on high visibility of the rearview mirror, rather than on the convenience of the imaging device. This embodiment was designed based on the concept of how to cover for the blind spot for the rearview mirrors when the rearview mirrors are mainly used as a rearview recognition apparatus for a motorcycle. This concept was thought to be the most crucial to improve the visibility of the rearview mirror. The embodiment was thus embodied by a novel rearview recognition apparatus having imaging devices used to help the rearview mirrors, thereby ensuring higher rearview visibility. The rearview recognition apparatus of the embodiment is originally designed to be a supplemental device for the rearview mirrors. It should be understood that when the rider is going to change the lanes, the rider needs to directly, visually recognize circumstances in the blind spot in addition to checking the rear side using the rearview mirrors and the apparatus of the embodiment.

Descriptions will be now made of an embodiment with reference to the accompanying drawings. In the descriptions, components, which have substantially the same functions, are represented by common reference numeral for the sake of the simplicity. The teaching of the embodiment is not limited to the following description.

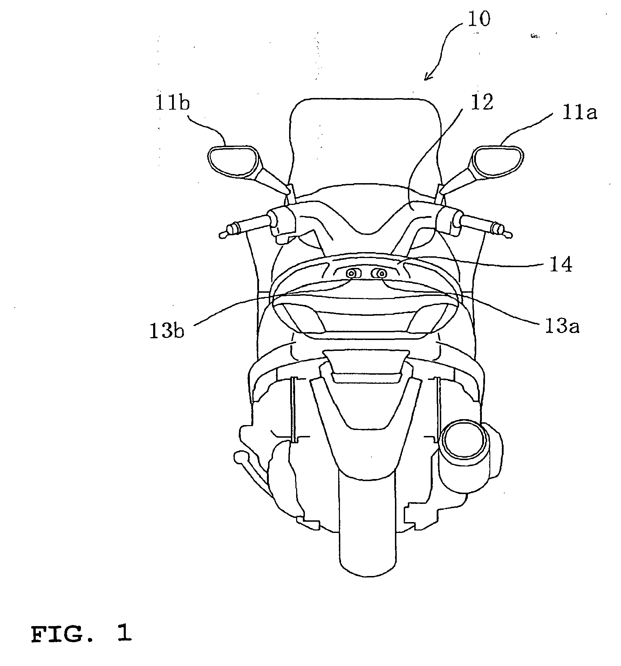

With reference to FIGs. 1 through 3, the basic construction of the rearview recognition apparatus for a motorcycle according to the embodiment is described.

FIG. 1 is a back view of a motorcycle 10 provided with the rearview recognition apparatus. A pair of rearview mirrors 11 a, 11 b are mounted to the right and left sides of a handlebar 12. At the rear part of the vehicle (e.g. the rearmost part of a grab bar 14), a pair of right and left imaging devices 13a, 13b are located for capturing images of the right and left rear-side views of the vehicle.

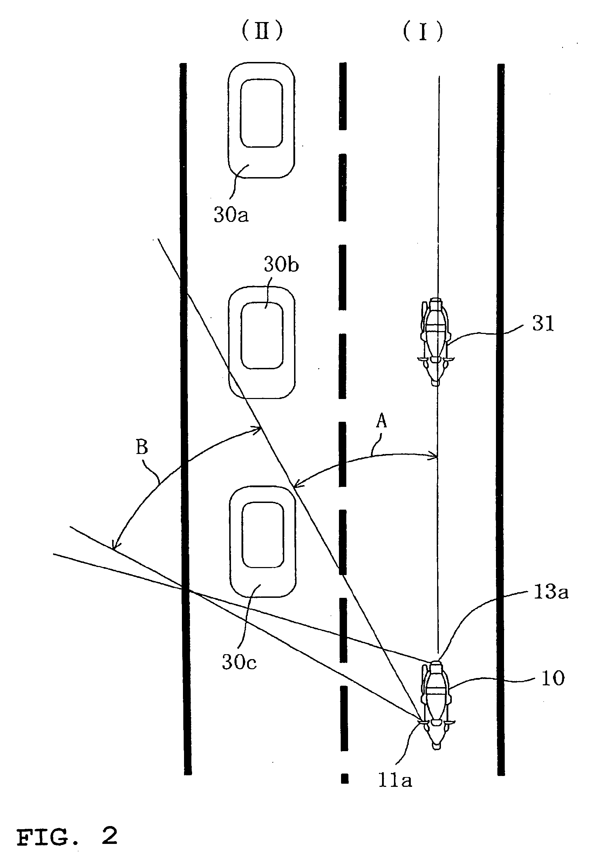

FIG. 2 is a view to describe an area where the imaging device 13a mounted to the right side of the vehicle can capture the image. As shown in FIG. 2, the imaging device 13a is set to capture an image of area including a first area (A) recognized with the right rearview mirror 11 a and a second area (B) located right of the first area (A) relative to the vehicle 10. The second area (B) corresponds to an area called a blind spot where the rider cannot see with the rearview mirror 11 a.

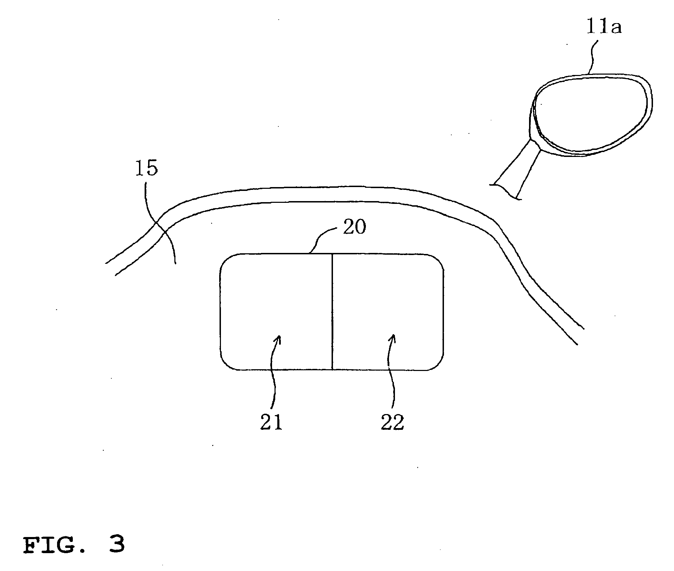

FIG. 3 shows a basic construction of the rearview recognition apparatus, which includes the rearview mirror 11 a for recognizing the right rear-side view (a rearview mirror 11 b for recognizing the left rear-side view is not shown) and a display screen 20 mounted to the upper part of a front cowling 15. The display screen 20 displays any of the images captured with the imaging devices 13a, 13b. Each image includes a section 21 for displaying the first area (A) and a section 22 for displaying the second area.

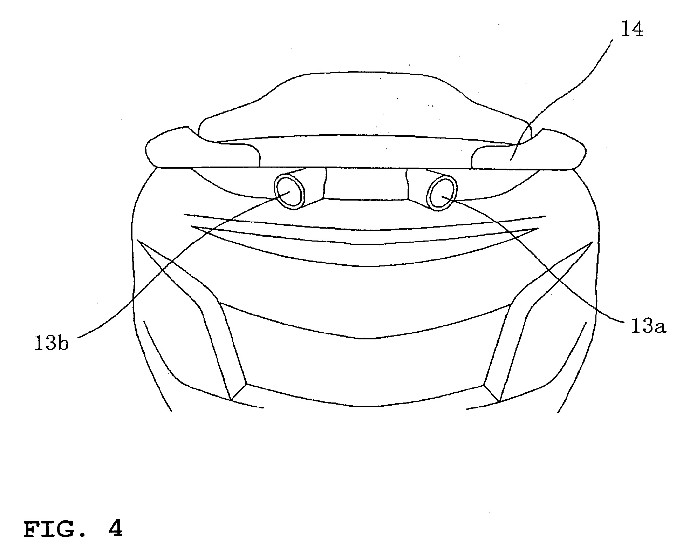

FIG. 4 shows an example in which the imaging devices 13a, 13b are actually mounted at the rear part of the vehicle. In the example shown in FIG. 4, the imaging devices 13a, 13b constituted with CCDs, are mounted below the rearmost part of the grab bar 14.

However, the CCD is so small that it may be selectively disposed with some flexibility. Using a wide-angle lens, the imaging devices can be set to capture an image in a desirable area range. Further, the imaging devices 13a, 13b are preferably angled downward toward the rear such that the imaging devices can cover an area corresponding to the blind spot on the right and left rear sides as widely as possible.

Descriptions will be next made of how to recognize the rear-side view of the vehicle using the rearview recognition apparatus, exemplifying the circumstance where the running motorcycle is going to change the lanes.

FIG. 2 illustrates a hypothetical circumstance where a rider's motorcycle 10 running on a first lane (I) is going to change to a second lane (II). On the second lane (II), other running vehicles 30a, 30b, 30c are diagonally behind the rider's motorcycle 10 while on the first lane (I), another motorcycle 31 is running right behind the rider's motorcycle 10.

As shown in FIG. 2, when the rider checks the rear side using the rearview mirrors 11 a mounted to the right side of the handlebar of the rider's motorcycle 10, he/she can see from the rearview mirror 11 an area range shown by an angle A but cannot see an area range shown by angle B called a blind spot for the rearview mirrors (and rider).

In contrast, the imaging device 13a located on the rear right side of the vehicle presets a range to capture an image including not only the area shown by angle A (first area) but also at least the area shown by angle B (second area).

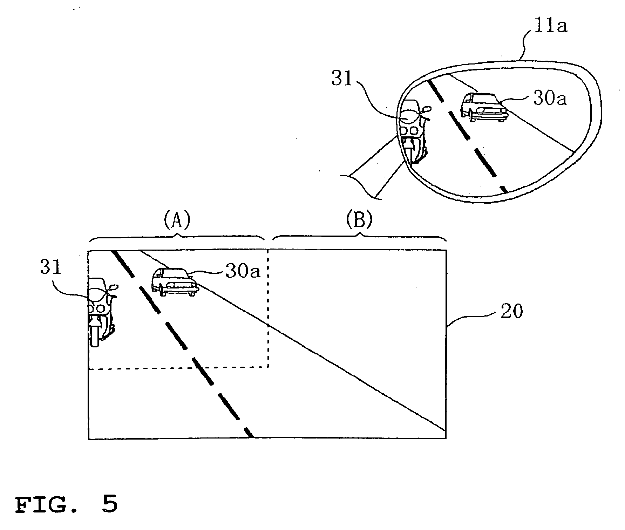

With reference to FIGs. 5 through 7, descriptions will be made of how to recognize the rear-side view of the vehicle under the circumstance shown in FIG. 2, using the rearview mirror 11 a and the display screen 20 which displays the image captured with the imaging device 13a.

FIG. 5 shows another vehicle 30a running on the lane (II) (assuming that no other vehicles 30b, 30c are running) which is reflected on the rearview mirror 11 a, and its image displayed on the display screen 20. FIG. 5 only shows a relative positional relationship between the rearview mirror 11a and the display screen 20.

In conjunction with operations of either one of right and left turn signals, the display screen 20 displays the image captured with the imaging device associated with the turn signal in operation. The object reflected on the rearview mirror 11 a is almost faithfully reproduced on the area A of the display screen 20 while the image of the blind spot for the rearview mirrors is displayed on the area B.

When the area A (first area) imaged with the imaging device is preset to include an area in a direction immediately rearward of the vehicle, the rider can easily determine whether the display screen 20 displays the image of the right- or left-side view with respect to the image of the area in the direction immediately rearward of the vehicle. For example, as shown in FIG. 5, when the motorcycle 31 is running behind the rider's motorcycle 10 on the lane (I), the motorcycle 31 (or part of the motorcycle 31) behind the motorcycle 10 is displayed on the left-end side of the area A of the display screen 20. This allows the rider to instantly determine that the display screen 20 displays the image of the right rear-side view.

As shown in FIG. 5, the rider can recognize only using the rearview mirror 11a the position of another vehicle 30a running far behind his/her motorcycle 10. This allows the rider to make sure a relative distance between his/her motorcycle 10 and another vehicle without checking the display screen 20. When the motorcycle 10 changes the lanes, the rider operates the right turn signal and then the display screen 20 displays the image of the right rear-side view. The rider can thus rerecognize that there is no other running vehicles displayed on the area B of the display screen 20 or the blind spot.

The size of the image to be displayed on the area A of the display screen 20 may be preset approximately equal to the size of the object reflected on the rearview mirror 11 a. This helps the rider see the enlarged image displayed on the area A without feeling any discomfort, upon moving his/her line-of-sight from the rearview mirror 11 a reflecting the object to the display screen 20.

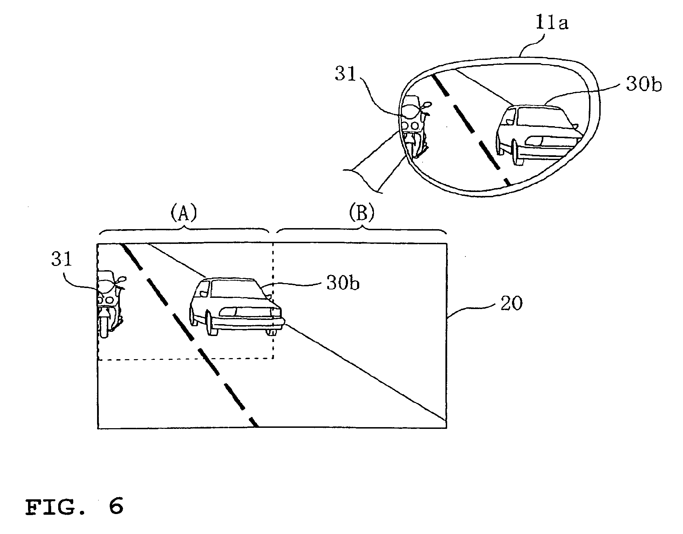

FIG. 6 shows another vehicle 30b running on the lane (II) (assuming that no other vehicles 30a, 30c are running) which is reflected on the rearview mirror 11 a, and its image displayed on the display screen 20.

As shown in FIG. 6, another vehicle 30b running on the lane (II) looks big in the rearview mirror 11 a, so that the rider can recognize that the relative distance between his/her motorcycle 10 and another vehicle 30b is short. Also in such a case, when the motorcycle 10 is going to change the lanes, the rider operates the right tum signal and then the display screen 20 displays the image of the right rear-side view. Thus, seeing the area B of the display screen 20, the rider can rerecognize that there are no other vehicles running in the blind spot.

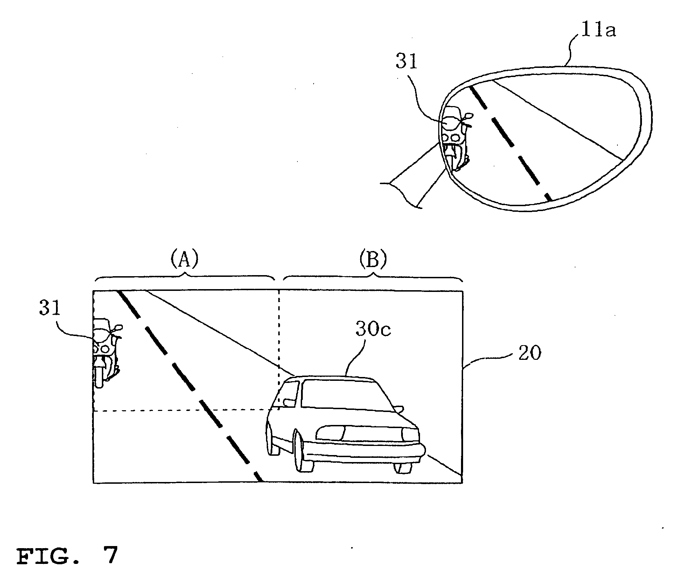

FIG. 7 shows another vehicle 30c running on the lane (II) (assuming that no other vehicles 30a, 30b are running) which is reflected on the rearview mirror 11 a, and its image displayed on the display screen 20.

In this case, another vehicle 30c is running in the blind spot for the rearview mirror 11a, so that the rider cannot recognize another vehicle 30c by solely checking the rear-side view using the rearview mirror 11 a. Therefore, the rider operates the right turn signal to indicate his/her intension to change the lanes and checks on the display screen 20 the rear side of the vehicle. This allows the rider to recognize that there is another vehicle 30c in the blind spot that corresponds to the area B of the display screen 20.

Descriptions are made only of the right rearview mirror 11 a and imaging device 13a with reference to FIGs. 5 through 7. However, the rider can also check the field-of-view on the left rear side of the vehicle using the left rearview mirror 11 b and imaging device 13b in the same manner as previously described.

In the rearview recognition apparatus, a pair of the right and left imaging devices 13a, 13b provided on the vehicle capture an image of area including the area A (first area) recognized with the rearview mirrors 11a, 11b and the area B (second area) corresponding to the blind spot for the rearview mirrors. This allows these two areas to be displayed on the display screen 20 at the same time. Thus, when the rider sees the image on the display screen 20 to recognize the rear-side view of the vehicle, he/she can instantly recognize the area B corresponding to the blind spot for the rearview mirrors according to the area A recognized with the rearview mirrors 11 a, 11 b. This is because the rider mainly uses the rearview mirrors 11 a, 11 b to recognize the rear-side view of the vehicle while driving, so that the object reflected on the rearview mirrors 11 a, 11 b remains as memory for the rider even when he/she moves his/her line-of-sight to the display screen 20. This allows the rider to instantly recognize the information on the area B corresponding to the blind spot where the rider cannot see with the rearview mirrors, so that the rider can more certainly recognize the rear-side view of the vehicle while driving.

In conjunction with operations of either one of the right and left turn signals, the display screen only displays the image captured with the imaging device 20 that is associated with the turn signal in operation, which allows the rider to instantly determine whether the display screen 20 provides information on the right or left side. This is because the rider can remember which turn signal he/she operated, and therefore can automatically recognize that the display screen 20 displays the image associated with the direction indicated by the turn signal. This allows the rider to more certainly recognizing the rear-side view of the vehicle while driving.

Further, the display screen 20 may be designed to indicate a mark to distinguish the area A (first area) recognized with the rearview mirrors 11a, 11b from the area B (second area) corresponding to the blind spot for the rearview mirrors. This helps the rider easily determine the image on the area A or the area B.

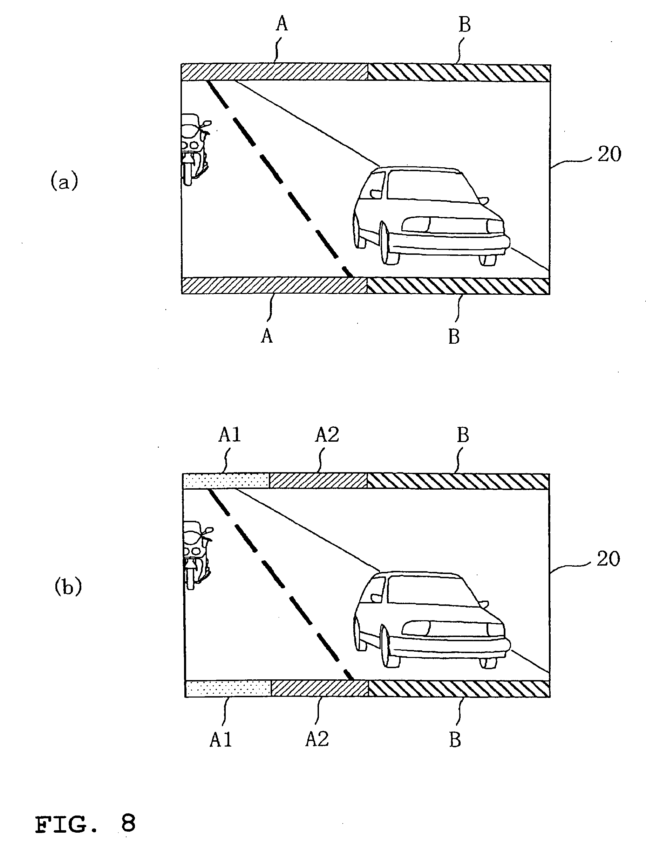

For example, as shown in FIG. 8(a), each of the strip-shaped rectangular sections to be indicated along top and bottom edges of the display screen 20 may be shown in different colors between the area A and the area B. The area B corresponds to the blind spot. So, if the image of another vehicle appears on the area B of the display screen, the rider can recognize that another vehicle approaches his/her motorcycle. The area B may be shown in red, which helps the rider pay more attention to checking the rear side of the vehicle.

As shown in FIG. 8(b), the area A may be further divided into two, A1 and A2. For example, the area A1 may be shown in blue while the area A2 may be shown in yellow, so that the rider can distinguish the colors and easily determine, based on the color, how close another vehicle approaches his/her motorcycle from behind.

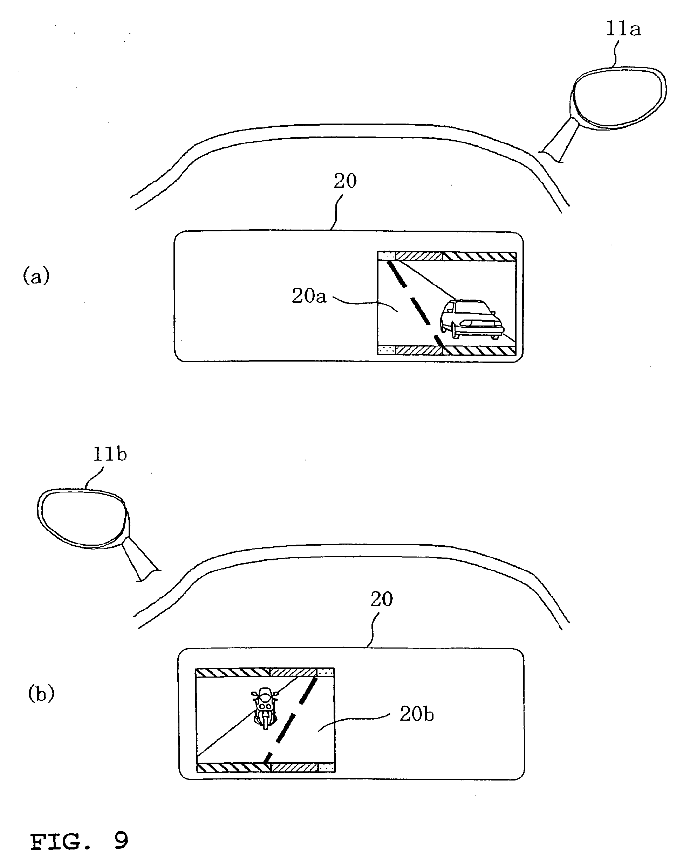

Also as shown in FIGs. 9(a) and 9(b), the images respectively captured with the right and left imaging devices 13a, 13 may be each displayed on the right and left sections of the display screen 20. As shown in FIG. 9(a), the image captured with the right imaging device 13a is displayed on the right section 20a of the display screen 20. As shown in FIG. 9(b), the image captured with the left imaging device 13b is displayed on the left section 20b of the display screen 20. Displaying the images in the manner described above enables the rider to easily determine whether the image of the right or left side of the vehicle appears on the display screen 20 based on the section the image appears.

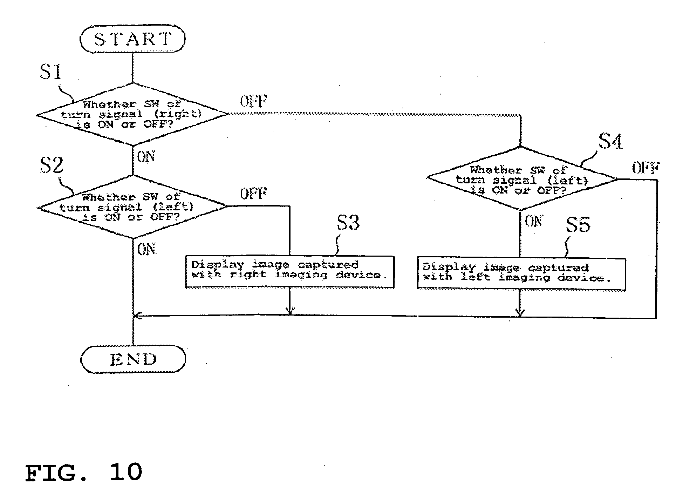

With reference to a flowchart shown in FIG. 10, descriptions will be next made of a basic process for controlling display on the display screen in conjunction with operations of the turn signal.

In the step S1, whether a switch (SW) of the right turn signal is ON or OFF is detected. If ON, then whether a switch (SW) of the left turn signal is ON or OFF is detected in the step S2. If OFF, then the display screen displays the image captured with the right imaging device (step S3). If OFF in the step S1, then whether the switch (SW) of the left turn signal is ON or OFF is detected in the step S4. If ON, then the display screen displays the image captured with the left imaging device (step S5).

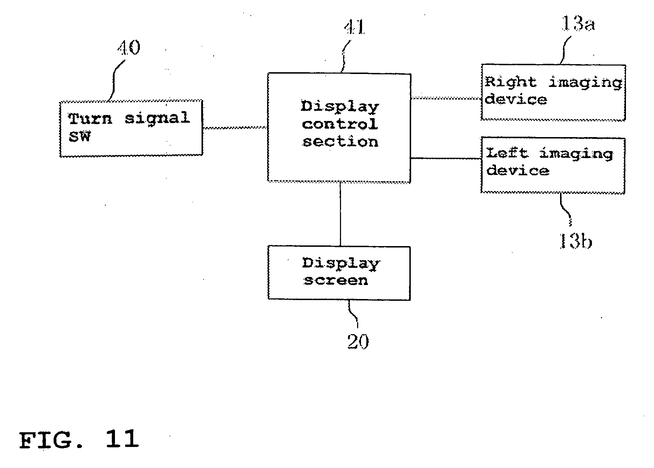

FIG. 11 illustrates a basic configuration of the rearview recognition apparatus. As shown in FIG. 11, in conjunction with the operations of the turn signal SW 40, a display control section 41 (e.g. MCU) selects either one of the images captured with the right and left imaging devices 13a, 13b, which is associated with the direction indicated by the right or left turn signal. The selected image is flipped horizontal on the display screen 20 with the display control section 41. Thereby, the display screen can display the image with the same phase as the object reflected on the rearview mirror.

The present embodiment can provide a rearview recognition apparatus for a motorcycle which ensures high visibility of a rearview mirror while allowing a rider to instantly recognize information on the right and left rear sides of the vehicle as well as on a blind spot for the rearview mirrors.

The description above discloses (amongst others) an embodiment of a rearview recognition apparatus for a motorcycle including a pair of rearview mirrors mounted to the right and left sides of a handlebar for recognizing the rear-side view of the vehicle, the apparatus having: a pair of imaging devices provided on the right and left sides of the motorcycle for capturing images of the right and left rear-side views of the motorcycle; and a display screen for displaying the images captured with the imaging devices, in which each of the imaging devices is set to capture an image of area including a first area recognized with the rearview mirror and a second area located on the side of the first area relative to the vehicle, and in which the display screen displays the first and second areas so that the rider recognizes the rear-side view of the motorcycle. Further, the display screen displays, in conjunction with operations of either one of right and left turn signals, the image captured with either one of the right and left imaging devices that is associated with the turn signal in operation. Further, the size of the image to be displayed on the first area is approximately equal to the size of an object reflected on the rearview mirror.

According to another aspect of the preferred embodiment, the display screen indicates a distinguishing mark for distinguishing the first area from the second area.

The distinguishing mark is preferably indicated such that at least one of rectangular sections to be indicated along top and bottom edges of the display screen is shown in different colors.

According to still another aspect of the preferred embodiment, the first area includes at least an area in the direction immediately reward of the vehicle.

According to still another aspect of the preferred embodiment, the second area corresponds to a blind spot for the rearview mirrors.

According to still another aspect of the preferred embodiment, the display screen displays the image captured with the imaging device and flipped horizontally.

According to still another aspect of the preferred embodiment, the images respectively captured with the right and left imaging devices are each displayed on the right and left sections of the display screen.

According to still another aspect of the preferred embodiment, the pair of right and left imaging devices are individually located below the rearmost part of a grab bar of the vehicle.

The motorcycle of the embodiments is provided with the aforementioned rearview recognition apparatus.

In the rearview recognition apparatus of the afore-discussed embodiment, a pair of the right and left imaging devices provided on the vehicle capture an image of area including the area recognized with the rearview mirrors and the area corresponding to the blind spot for the rearview mirrors. This allows these two areas to be displayed on the display screen at the same time. Thus, when the rider sees the image on the display screen to recognize the rear-side view of the vehicle, he/she can instantly recognize the area corresponding to the blind spot for the rearview mirrors according to the area recognized with the rearview mirrors. This is because the rider mainly uses the rearview mirrors to recognize the rear-side view of the vehicle while driving, so that the object reflected on the rearview mirrors remains as memory for the rider even when he/she moves his/her line-of-sight to the display screen. This allows the rider to instantly recognize the information on the area corresponding to the blind spot where the rider cannot see with the rearview mirrors.

In conjunction with operations of either one of the right and left turn signals, the display screen only displays the image captured with the imaging device that is associated with the turn signal in operation, which allows the rider to instantly determine whether the display screen provides information on the right or left side. This is because the rider can remember which turn signal he/she operated, and therefore can automatically recognize that the display screen displays the image associated with the direction indicated by the turn signal.

Within the above description, there is provided an embodiment of a rearview recognition apparatus for a motorcycle which ensures high visibility of a rearview mirror while allowing a rider to instantly recognize information on the right and left rear sides of the vehicle as well as on a blind spot for the rearview mirrors. Therein, a pair of imaging devices 13a, 13b for capturing images of the right and left rear-side views of the vehicle; and a display screen 20 for displaying the images captured with the imaging devices are provided. Each of the imaging devices is set to capture an image of area including a first area recognized with the right or left rearview mirror 11 a or 11 b and a second area (blind spot) located on the side of the first area relative to the vehicle. The display screen 20 displays, in conjunction with operations of either one of left and right turn signals, the image of the first and second areas captured with the imaging device that is associated with the turn signal in operation, so that the rider can recognize the rear-side view of the vehicle.

## Claims

1. Rearview recognition apparatus for a motorcycle (10), having a pair of rear-view mirrors (11a,11b) mounted to the right and left sides of a handlebar (12) of the motorcycle for recognizing a rear-side view of the motorcycle,
a pair of imaging devices (13a, 13b) provided on the right and left sides of the motorcycle for capturing images of the right and left rear-side views of the motorcycle; and
a display screen (20) for displaying images captured with the imaging devices (13a, 13b), wherein a first section (21) of the display screen (20) displays an area corresponding to the area (A) visible by the rear-view mirror (11a,11b), and a second section (22) of the display screen (20) displays an area (B) adjacent to the area (A) given by the rear-view mirror (11a,11b),
wherein each of the imaging devices (13a, 13b) is set to capture an image of area including a first area (A) recognized with the rearview mirror (11a, 11b) and a second area (B) located on the side of the first area (A) relative to the motorcycle (10), wherein the display screen (20) displays the first and second areas (A, B) so that the rider recognizes the rear-side view of the motorcycle,
wherein the display screen (20) displays, in conjunction with operations of either one of right and left turn signals, the image captured with either one of the right and left imaging devices (13a, 13b) that is associated with the turn signal in operation, and wherein the size of the image to be displayed on the first area (A) is approximately equal to the size of an object (30a) reflected on the rearview mirror (11a, 11b),

2. Rearview recognition apparatus according to claim 1, wherein the display screen (20) indicates a distinguishing mark for distinguishing the first area (A) from the second area (B).

3. Rearview recognition apparatus according to claim 2, wherein the distinguishing mark is indicated such that at least one of the rectangular sections (21,22) to be indicated along top and bottom edges of the display screen (20) is shown in different colors.

4. Rearview recognition apparatus according to one of the claims 1 to 3, wherein the first area (A) includes at least an area in the direction immediately rearward of the motorcycle.

5. Rearview recognition apparatus according to one of the claims 1 to 4, wherein the second area (B) corresponds to a blind spot for the rearview mirror or rearview mirrors (11a,11b).

6. Rearview recognition apparatus according to one of the claims 1 to 5, wherein the display screen (20) displays the image captured with the imaging device (13a,13b) and flipped horizontally.

7. Rearview recognition apparatus according to one of the claims 1 to 6, wherein the images respectively captured with the right and left imaging devices (13a,13b) are each displayed on the right and left sections (21,22) of the display screen (20).

8. Rearview recognition apparatus according to one of the claims 1 to 7, wherein the pair of right and left imaging devices (13a,13b) are individually located below the rearmost part of a grab bar (14) of the motorcycle (10).

9. Motorcycle (10) provided with the rearview recognition apparatus according to one of the claims 1 through 8.

## Patentansprüche

1. Rückblick- Erkennungsvorrichtung für ein Motorrad (10), mit einem Paar von Rückspiegeln (11 a, 11 b), montiert auf der rechten und linken Seite des Griffs (12) des Motorrades (10) zum Erkennen einer rückblickenden Sicht des Motorrades, einem Paar von Bildvorrichtungen (13a, 13b), vorgesehen auf der rechten und linken Seite des Motorrades zum Erfassen von Bildern der rechten und linken rückblickenden Sicht des Motorrades;
und
einen Anzeigebildschirm (20) zum Anzeigen von Bildern, aufgenommen mit den Bildvorrichtungen (13a, 13b), wobei ein erster Abschnitt (21) des Anzeigebildschirms (20) einen Bereich entsprechend des Bereiches (A), sichtbar durch den Rückspiegel (11a, 11b), anzeigt und ein zweiter Abschnitt (22) des Anzeigebildschirms (20) einen Bereich (B), benachbart zu dem Bereich (A), dargestellt durch den Rückspiegel (11a, 11b), anzeigt,
wobei jede der Bildvorrichtungen (13a, 13b) festgelegt ist, ein Bild eines Bereichs einzufangen, enthaltend einen ersten Bereich (A), erkannt mit dem Rückspiegel (11a, 11b), und einen zweiten Bereich (B), angeordnet auf der Seite des ersten Bereichs (A) in Bezug auf das Motorrad (10),
wobei der Anzeigebildschirm (20) den ersten und zweiten Bereich (A, B) so anzeigt, dass der Fahrer die rückblickende Sicht des Motorrades erkennt,
wobei der Anzeigebildschirm (20), in Verbindung mit Betätigungen von entweder dem rechten oder linken Blinklicht, das Bild anzeigt, aufgenommen mit entweder der rechten oder linken Bildvorrichtung (13a, 13b), die bei Betätigung mit dem Blinklicht verbunden ist, und wobei die Größe des anzuzeigenden Bildes auf dem ersten Bereich (A) ungefähr zu der Größe eines auf dem Rückspiegel (11a, 11b) reflektierten Objektes (30a) gleich ist.

2. Rückblick- Erkennungsvorrichtung nach Anspruch 1, wobei der Anzeigebildschirm (20) eine Unterscheidungsmarkierung zum Unterscheiden des ersten Bereiches (A) von dem zweiten Bereich (B) anzeigt.

3. Rückblick- Erkennungsvorrichtung nach Anspruch 2, wobei die Unterscheidungsmarkierung derart angezeigt wird, dass zumindest einer der rechteckigen Abschnitte (21, 22), der längs der oberen und Bodenkanten des Anzeigebildschirms (20) angezeigt werden soll, in verschiedenen Farben angezeigt wird.

4. Rückblick- Erkennungsvorrichtung nach einem der Ansprüche 1 bis 3, wobei der erste Bereich (A) zumindest einen Bereich in der Richtung unmittelbar hinter dem Motorrad enthält.

5. Rückblick- Erkennungsvorrichtung nach einem der Ansprüche 1 bis 4, wobei der zweite Bereich (B) einem blinden Fleck für den Rückspiegel oder die Rückspiegel (11 a, 11 b) entspricht.

6. Rückblick- Erkennungsvorrichtung nach einem der Ansprüche 1 bis 5, wobei der Anzeigebildschirm (20) das Bild, aufgenommen mit der Bildvorrichtung (13a, 13b) und horizontal gedreht, anzeigt.

7. Rückblick- Erkennungsvorrichtung nach einem der Ansprüche 1 bis 6, wobei die Bilder, jeweils aufgenommen mit der rechten und linken Bildvorrichtung (13a, 13b), jedes auf dem rechten und linken Abschnitt (21, 22) des Anzeigebildschirms (20) angezeigt wird.

8. Rückblick- Erkennungsvorrichtung nach einem der Ansprüche 1 bis 7, wobei das Paar von rechten und linken Bildvorrichtungen (13a, 13b) individuell unter dem hintersten Teil einer Griffstange (14) des Motorrades (10) angeordnet ist.

9. Motorrad (10), versehen mit der Rückblick- Erkennungsvorrichtung nach einem der Ansprüche 1 bis 8.

## Revendications

1. Système de rétroviseur pour une motocyclette (10) possédant une paire de miroirs formant rétroviseurs (11a, 11b) montés sur les côtés droit et gauche du guidon (12) de la motocyclette afin d'effectuer une reconnaissance de la vue arrière de la motocyclette,
une paire de dispositifs de formation d'image (13a, 13b) prévus sur les côtés droit et gauche de la motocyclette afin de reproduire des images des vues arrière latérales droite et gauche de la motocyclette, et
un écran d'affichage (20) destiné à afficher des images reproduites avec les dispositifs de formation d'image (13a, 13b), une première section (21) de l'écran d'affichage (20) affichant une zone correspondant à la zone (A) visible par le miroir formant rétroviseur (11a, 11b), et une seconde section (22) de l'écran d'affichage (20) affichant une zone (B) contiguë à la zone (A) montrée par le miroir formant rétroviseur (11a, 11b),
dans lequel chacun des dispositifs de formation d'image (13a, 13b) est réglé pour reproduire l'image d'une zone incluant une première zone (A) reconnue avec le miroir formant rétroviseur (11a, 11b) et une seconde zone (B) située sur le côté de la première zone (A) par rapport à la motocyclette (10),
dans lequel l'écran d'affichage (20) montre les première et seconde zones (A, B) de telle sorte que le pilote reconnaisse la vue arrière de la motocyclette,
dans lequel l'écran d'affichage (20) montre, conjointement avec le fonctionnement de l'un quelconque parmi les signaux de clignotants droit et gauche, l'image reproduite avec l'un quelconque parmi les dispositifs de formation d'image droite et gauche (13a, 13b) qui est associée au signal de clignotement en fonctionnement, et
dans lequel la taille de l'image à afficher sur la première zone (A) est approximativement égale à la taille d'un objet (30a) réfléchi sur le miroir formant rétroviseur (11a, 11b).

2. Système de rétroviseur selon la revendication 1, dans lequel l'écran d'affichage (20) indique une marque distinctive destinée à distinguer la première zone (A) de la seconde zone (B).

3. Système de rétroviseur selon la revendication 2, dans lequel la marque distinctive est indiquée de telle sorte qu'au moins l'une des sections rectangulaires (21, 22) devant être indiquée le long des bords supérieur et inférieur de l'écran d'affichage (20) soit représentée en différentes couleurs.

4. Système de rétroviseur selon l'une des revendications 1 à 3, dans lequel la première zone (A) inclut au moins une zone dans la direction immédiatement vers l'arrière de la motocyclette.

5. Système de rétroviseur selon l'une des revendications 1 à 4, dans lequel la seconde zone (B) correspond à une zone aveugle du miroir formant rétroviseur ou des miroirs formant rétroviseurs (11a, 11b).

6. Système de rétroviseur selon l'une des revendications 1 à 5, dans lequel l'écran d'affichage (20) montre une image reproduite avec le dispositif de formation d'image (13a, 13b) et retournée horizontalement.

7. Système de rétroviseur selon l'une des revendications 1 à 6, dans lequel les images reproduites respectivement avec les dispositifs de formation d'image droit et gauche (13a, 13b) sont chacune affichées sur les sections droite et gauche (21, 22) de l'écran d'affichage (20).

8. Système de rétroviseur selon l'une des revendications 1 à 7, dans lequel les deux dispositifs de formation d'image droit et gauche (13a, 13b) sont situés individuellement en dessous de la partie la plus à l'arrière du guidon (14) de la motocyclette (10).

9. Motocyclette (10) pourvue du système de rétroviseur conforme à l'une des revendications 1 à 8.
